# EUROPÄISCHE PATENTSCHRIFT

(11) **EP 2 730 829 B1**
(45) Veröffentlichungstag und Bekanntmachung des Hinweises auf die Patenterteilung: **06.09.2017**
(21) Anmeldenummer: 13176951.5
(22) Anmeldetag: 18.07.2013
(51) Int. Cl.: F16L 47/02, F16L 47/14, B29C 65/02, B29C 65/06, B29C 65/10, B29C 65/14

(54) **Kunststoffrohr**
Plastic pipe
Tuyau en plastique

(30) Priorität: 09.11.2012 DE 102012110729
(43) Veröffentlichungstag der Anmeldung: 14.05.2014
(73) Patentinhaber: VERITAS AG, 63571 Gelnhausen (DE)
(72) Erfinder: Hattaß, Dirk, 63584 Gründau (DE); Werth, Josef, 63571 Gelnhausen (DE)
(74) Vertreter: Patentship Patentanwaltsgesellschaft mbH

(56) Entgegenhaltungen:
- DE-C1- 10 216 175
- US-B1- 6 880 593
- LAND W: "REIBSCHWEISSEN NACH DEM ROTATIONS- UND VIBRATIONSVERFAHREN", PLASTVERARBEITER, HUETHIG GMBH, HEIDELBERG, DE, Bd. 34, Nr. 8, 1. August 1983 (1983-08-01) , Seite 698/699, XP000677074, ISSN: 0032-1338
- THEWS H: "REIBSCHWEISSEN. ROTATIONSREIB- UND VIBRATIONSSCHWEISSEN", KUNSTOFFE, CARL HANSER VERLAG, MUNCHEN, DE, Bd. 71, Nr. 10, 1. Oktober 1981 (1981-10-01), Seiten 764-768, XP000677087, ISSN: 0023-5563

## Beschreibung

Die vorliegende Erfindung betrifft ein Kunststoffrohr, insbesondere für ein Ladeluftrohr in einem Kraftfahrzeug.

Bei dem Verschweißen von Kunststoffrohren, beispielsweise bei der Automobilfertigung, werden die Enden von Kunststoffrohren erhitzt und aufeinander gepresst, so dass die Enden der Kunststoffrohre miteinander verschmelzen. Der Schweißprozess erfolgt beispielsweise durch Infrarotschweißen, Rotationsschweißen oder Heißgasschweißen, bei dem der Kunststoff in einem definierten Bereich plastifiziert und zusammengefügt wird. Bei diesem Vorgang wird der geschmolzene Kunststoff an der Verbindungsstelle der Kunststoffrohre zur Seite gedrückt und es entsteht ein sogenannter Schweißaustrieb. Anschließend härtet der Schweißaustrieb aus und bildet an der Außen- und/oder Innenseite des Kunststoffrohres eine Wulst. Diese Wulst kann die Strömungseigenschaften im Inneren des Rohres beeinträchtigen. Daher werden an der Kontaktfläche oftmals Aussparungen zum Aufnehmen des Schweißaustriebs angeordnet. Diese Aussparungen - auch als Schweißaustriebreservoire bezeichnet - "kapseln" den Schweißaustrieb ab, so dass störende Einflüsse weitgehend ausgeschlossen werden.

Die Druckschrift DE 10 2007 026 826 A1 betrifft ein zweiteiliges Ansaugsystem aus einem thermoplastischen Kunststoff für eine Brennkraftmaschine mit einer Luftzufuhröffnung und wenigstens einer Öffnung zur Abgabe der Luft an eine Brennkraftmaschine. Zur Bildung einer Schweißnaht sind auf den beiden Teilen jeweils umlaufende Kontaktflächen vorgesehen. Der Schweißaustrieb wird in Aufnahmerinnen gesammelt. Allerdings beeinträchtigen die Schweißaustriebreservoire die Stabilität der Verbindung.

Die Druckschrift US 6,880,593 B1 betrifft ein Kraftstoffeinfüllsystem. Das Kraftstoffeinfüllsystem umfasst ein Rohr dass eine im Querschnitt trapezförmige Schweißfläche zum Verschweißen des Rohres mit einem weiteren Rohr umfasst.

Die Druckschrift DE 102 16 175 C1 beschreibt ein Rohr bestehend aus einem Innenmantel und einem Außenmantel, wobei der Innenmantel einen Innenraum zur Aufnahme oder Leitung eines Mediums umschließt.

Die Druckschrift "Reibschweißen nach dem Rotations- und Vibrationsverfahren", 4020 Plast-Verarbeiter 34 (1983) Aug., No.8, Speyer, Rhein, Deutschland, beschreibt, dass beim Rotationsschweißen die Plastifizierung durch Reibungsenergie erreicht wird, indem das rotierende obere Formteil durch einen Mitnehmerring mit einer definierten variablen Anpresskraft gegen das untere fest in einer Spannvorrichtung gehaltene Formteil gepresst wird.

Die Druckschrift "Reibschweißen", 2376 Kunststoffe, 71 (1981), 10, München, Deutschland, beschreibt Beispiele für die Fügeflächengestaltung von Bauteilen, die mittels Rotationsreibschweißen verbunden werden sollen.

Es ist die der Erfindung zugrundeliegende Aufgabe, ein Kunststoffrohr mit verbesserter Schweißgeometrie anzugeben, die zu einer stabileren Verschweißung führt, ohne dass sich ein Schweißaustrieb an einer Innenseite des Kunststoffrohres bildet.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch ein Kunststoffrohr mit einer Rohrwand gelöst, mit einer Schweißfläche zum Verschweißen des Kunststoffrohrs mit einem weiteren Kunststoffrohr, die ein inneres Schweißaustriebsreservoir zum Aufnehmen eines nach Innen gedrückten Schweißaustriebs umfasst; und einem Verstärkungsabschnitt zum Verstärken der Rohrwand im Bereich des Schweißaustriebsreservoirs, in dem ein Außendurchmesser des Kunststoffrohres zur Schweißfläche hin kontinuierlich zunimmt.

Dadurch wird beispielsweise der technische Vorteil erreicht, dass eine Formoptimierung des Kunststoffrohrs im Schweißnahtbereich erreicht wird, so dass eine Reduktion und Gleichverteilung von Spannungen erfolgt. Dies bewirkt eine Bauteilverbesserung unter schwierigen Einsatzbedingungen, insbesondere bei höheren Belastungen durch einen Innendruck. Zudem können Sauberkeitsanforderungen in Innenbereich des Kunststoffrohrs eingehalten werden.

Die Kunststoffrohre können im Allgemeinen alle fluidfördemden und geschweißten Kunststoffrohre für beispielsweise Luft, Wasser oder Öl sein, die äußeren oder inneren Belastungen ausgesetzt sind. Das Kunststoffrohr kann insbesondere ein Ladeluftrohr in einem Kraftfahrzeug sein.

In einer vorteilhaften Ausführungsform des Kunststoffrohres ist der Innendurchmesser des Kunststoffrohrs im Verstärkungsabschnitt nahezu konstant. Insbesondere wenn von werkzeugbedingten Entformungsschrägen abgesehen wird. Dadurch wird beispielsweise der technische Vorteil erreicht, dass sich eine kontinuierliche und glatte Rohrinnenseite ergibt. In einer weiteren vorteilhaften Ausführungsform des Kunststoffrohres läuft das innere Schweißaustriebsreservoir umlaufend, vorzugsweise kreisförmig, in der Schweißfläche herum. Dadurch wird beispielsweise der technische Vorteil erreicht, dass der Schweißaustrieb vollumfänglich aufgenommen werden kann.

In einer weiteren vorteilhaften Ausführungsform des Kunststoffrohres weist das innere Schweißaustriebsreservoir eine möglichst große Tiefe auf, beispielsweise eine Tiefe von 1 mm bis 15 mm, vorzugsweise von 4 mm bis 10 mm und hochvorzugsweise von 5 mm bis 8 mm. Dadurch wird beispielsweise eine lokale Verringerung der Bauteilsteifigkeit erreicht, welche zu einer geringeren Schweißnahtbelastung führt.Gemäß der Erfindung ist das innere Schweißaustriebsreservoir im Querschnitt keilförmig. Dadurch wird beispielsweise der technische Vorteil erreicht, dass sich die Stabilitätseigenschaften verbessern, da mit zunehmender Tiefe die Aussparung des Schweißaustriebsreservoirs immer schmaler wird.

In einer weiteren vorteilhaften Ausführungsform des Kunststoffrohres weist die Rohrwand zwischen dem inneren Schweißaustriebsreservoir und einer Außenseite des Verstärkungsabschnittes zumindest die gleiche Wandstärke wie in einem Abschnitt mit konstantem Außendurchmesser auf. Dadurch wird beispielsweise ebenfalls der technische Vorteil erreicht, dass sich die Stabilitätseigenschaften verbessern, da eine bestimmte Wandstärke nicht unterschritten wird.

In einer weiteren vorteilhaften Ausführungsform des Kunststoffrohres umfasst die Schweißfläche ein äußeres Schweißaustriebsreservoir zum Aufnehmen eines nach Außen gedrückten Schweißaustriebs. Dadurch wird beispielsweise der technische Vorteil erreicht, dass ein Schweißaustrieb nicht auf die Außenseite des Kunststoffrohres gelangt.

In einer weiteren vorteilhaften Ausführungsform des Kunststoffrohres umfasst der Verstärkungsabschnitt an einer Außenseite Verstärkungsrippen. Dadurch wird beispielsweise der technische Vorteil erreicht, dass sich die Festigkeit der Verbindungsstelle noch weiter verbessert.

In einer weiteren vorteilhaften Ausführungsform des Kunststoffrohres verlaufen die Verstärkungsrippen in einer Längsrichtung des Kunststoffrohres. Dadurch wird beispielsweise der technische Vorteil erreicht, dass Längskräfte, wie beispielsweise bei hohen Drücken, besonders wirksam aufgenommen werden können.

In einer weiteren vorteilhaften Ausführungsform des Kunststoffrohres sind die Verstärkungsrippen durch Fasern in Richtung der Verstärkungsrippen verstärkt. Dadurch wird beispielsweise der technische Vorteil erreicht, dass sich die Festigkeit der Verstärkungsrippen verbessert. Gemäß der Erfindung umfasst der Verstärkungsabschnitt einen außen umlaufenden Verstärkungsring. Dadurch wird beispielsweise der technische Vorteil erreicht, dass eine radiale Ausdehnung der Verbindungsstelle bei hohem Druck verringert wird. Gemäß der Erfindung ist der Verstärkungsring in Umlaufrichtung durch Fasern verstärkt. Dadurch wird beispielsweise der technische Vorteil erreicht, dass sich die Festigkeit des Verstärkungsrings verbessert.

In einer weiteren vorteilhaften Ausführungsform des Kunststoffrohres sind die Verstärkungsrippen mit dem Verstärkungsring verbunden. Dadurch wird beispielsweise der technische Vorteil erreicht, dass die Festigkeit des Kunststoffrohrs im Verbindungsbereich noch weiter verbessert wird.

In einer weiteren vorteilhaften Ausführungsform des Kunststoffrohres sind die Fasern Glasfasern, Metallfasern, Kunststofffasern oder Kohlenstofffasern. Dadurch wird beispielsweise der technische Vorteil erreicht, dass besonders geeignete Materialien zum Verstärken der jeweiligen Elemente verwendet werden.

In einer weiteren vorteilhaften Ausführungsform des Kunststoffrohres ist das Kunststoffrohr ein Spritzgussformteil. Dadurch wird beispielsweise der technische Vorteil erreicht, dass sich das Kunststoffrohr auf einfache Weise herstellen lässt.

In einer weiteren vorteilhaften Ausführungsform des Kunststoffrohres sind die Verstärkungsrippen und/oder der Verstärkungsring aus einem höherfesten Werkstoff gebildet, vorzugsweise aus einem Metall oder einem hochfestem Kunststoff. Ausführungsbeispiele der Erfindung sind in den Zeichnungen dargestellt und werden im Folgenden näher beschrieben.

Es zeigen:
Fig. 1 eine schematische Ansicht einer Verbindung von zwei Kunststoffrohren; und
Fig. 2 eine schematische Ansicht eines Schweißvorgangs;
Fig. 3 eine Querschnittsansicht durch zwei Kunststoffrohre vor einer Verbindung;
Fig. 4 eine Querschnittsansicht durch zwei Kunststoffrohre vor einer Verbindung entlang einer Längsrippe;
Fig. 5 eine Querschnittsansicht durch zwei Kunststoffrohre nach einer Verbindung entlang einer Längsrippe;
Fig. 6 eine Querschnittsansicht durch eine Rohrwand eines Kunststoffrohrs mit Linien eines gleichmäßigen Spannungsverlauf entlang einer Längsrippe;
Fig. 7 eine weitere Querschnittsansicht durch zwei Kunststoffrohre nach einer Verbindung zwischen zwei Längsrippen; und
Fig. 8 unterschiedliche Ansichten eines Kunststoffrohres mit Verstärkungsring und Verstärkungsrippen.

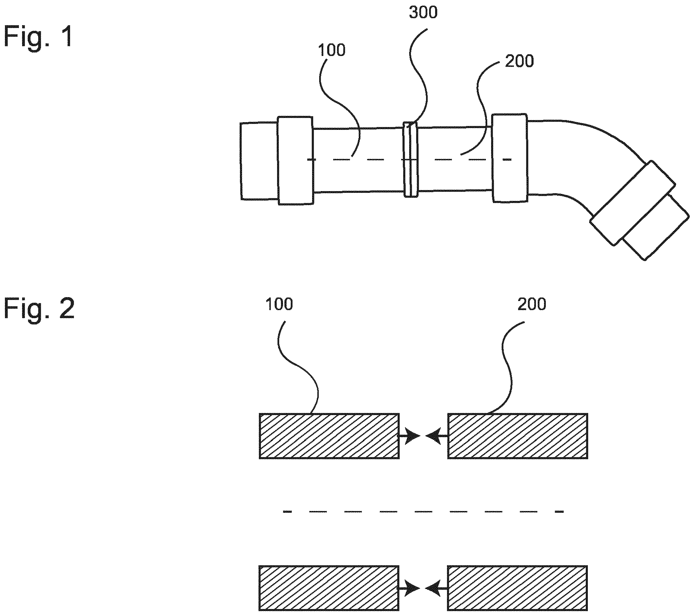

Fig. 1 zeigt eine schematische Ansicht einer Verbindung von zwei Kunststoffrohren 100 und 200. Komplexe oder lange Kunststoffrohre werden aufgrund ihrer Geometrie häufig aus zwei oder mehr Teilen hergestellt und anschließend miteinander verschweißt. Dazu werden die Kunststoffrohre 100 und 200 in einem Verbindungsabschnitt 300 erwärmt und aufeinander gesetzt. Für den Schweißprozess werden diverse Techniken eingesetzt, wie beispielsweise Infrarotschweißen, Rotationsschweißen oder Heißgasschweißen, bei denen der Kunststoff in einem definierten Bereich plastifiziert und zusammengefügt wird.

Fig. 2 zeigt eine schematische Ansicht eines Schweißvorgangs. Die stirnseitige Verschweißung zweier zylindrischer Kunststoffrohre 100 und 200 stellt die einfachste Variante dar. Das senkrechte Ende einer Rohrwand bildet eine Schweißfläche, die erwärmt wird und dadurch einen Schweißbereich bildet.

Nachteilig bei dieser Variante ist, dass flüssiger Kunststoff an der Verbindungsstelle beim Fügeprozess sowohl nach innen als auch nach außen herausgedrückt wird und ein Schweißaustrieb entsteht. Im Inneren des Kunststoffrohres kann der Schweißaustrieb einen erhöhten Strömungsdruckverlust verursachen. Daneben können sich Partikel oder Teile des Schweißaustriebs unkontrolliert ablösen. An der Außenseite entsteht eine ungewollte Kante oder Wulst. Daneben beeinträchtigt ein nach außen gedrückter Schweißaustrieb die ästhetischen Anforderungen.

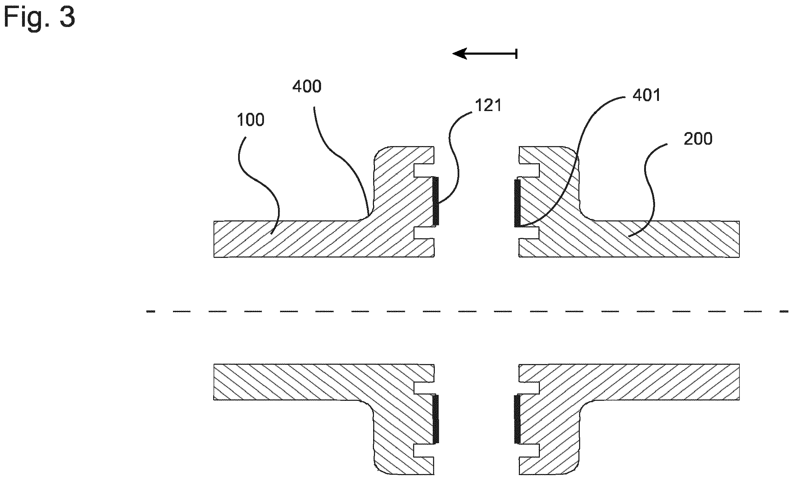

Fig. 3 zeigt eine Querschnittsansicht durch eine Rohrwand zweier Kunststoffrohre 100 und 200 vor einer Verbindung. Zur Aufnahme des Schweißaustriebs weisen diese Schweißaustriebreservoire auf, die durch Aussparungen gebildet werden. Durch die gegenüber der Rohrwand nach Außen versetzte Schweißfläche 121 und die dadurch entstehenden Hebelkräfte wirken bei einer Zugbelastung hohe Spannungen an dem Punkt 400 und dem Punkt 401, so dass an diesen Stellen eine Rissinitiierung beginnt

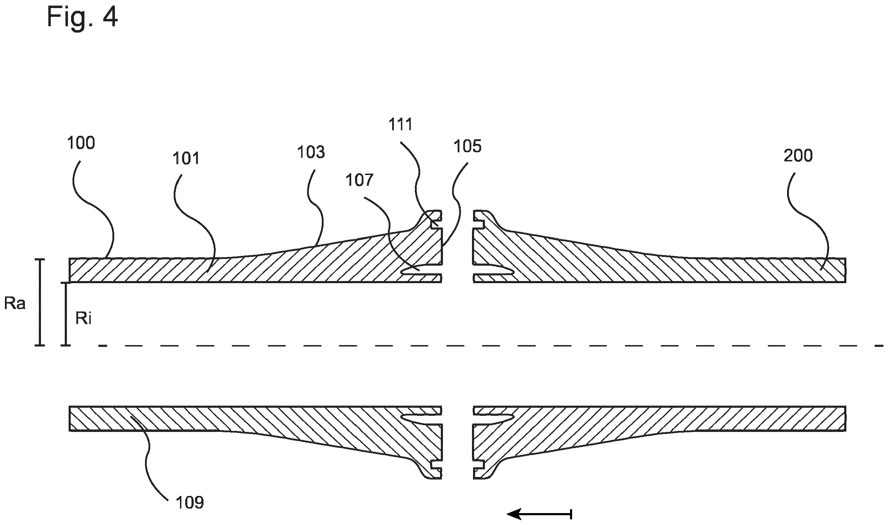

Fig. 4 zeigt eine Querschnittsansicht durch zwei Kunststoffrohre 100 und 200 vor einer Verbindung. Das Kunststoffrohr 100 umfasst eine Rohrwand 101 mit einer Schweißfläche 105 und einem Verstärkungsabschnitt 103. Der Verstärkungsabschnitt 103 dient zum Übertragen von Zugkräften an der Schweißfläche 105 auf das Kunststoffrohr 100 in Längsrichtung. Dadurch können Biegespannungen, die zu einer Beschädigung des Kunststoffrohrs 100 führen, verringert werden. Der Außendurchmesser Ra des Kunststoffrohres 100 nimmt in dem Verstärkungsabschnitt 103 zur Schweißfläche 105 hin kontinuierlich zu.

Der Innendurchmesser Ri des Kunststoffrohrs 100 ist in dem Verstärkungsabschnitt 103 nahezu konstant. In dem Verstärkungsabschnitt 103 der Rohrwand 101 nimmt der Außendurchmesser Ra des Kunststoffrohres 100 kontinuierlich zu, so dass sich in diesem Bereich eine Wandstärke graduell erhöht. Beispielsweise nimmt im Verstärkungsabschnitt 103 der Außendurchmesser Ra in einem Teil des Kunststoffrohres 100 linear zu.

Die Schweißfläche 105 an einem Ende des Verstärkungsabschnitts 103 dient zum Verschweißen des Kunststoffrohrs 100 mit einem weiteren Kunststoffrohr 200. Auf der Schweißfläche ist ein kreisförmiges inneres Schweißaustriebsreservoir 107 zum Aufnehmen eines nach Innen gedrückten Schweißaustriebs 117 gebildet. Das Schweißaustriebsreservoir 107 läuft kreisförmig in der Schweißfläche 105 um.

Zudem ist das innere Schweißaustriebsreservoir 107 im Querschnitt keilförmig zulaufend, so dass mit zunehmender Tiefe des Schweißaustriebsreservoirs 107 im Inneren des Verstärkungsabschnittes 103 die Wandstärke der Rohrwand 101 möglichst wenig vermindert wird. Die Rohrwand 101 weist zwischen dem inneren Schweißaustriebsreservoir 107 und einer Außenseite des Verstärkungsabschnittes 103 zumindest die gleiche Wandstärke wie in einem Abschnitt 109 mit konstantem Außendurchmesser auf.

Die Elemente des Kunststoffrohres 200 entsprechen denjenigen des Kunststoffrohres 100. Sowohl das Kunststoffrohr 100 als auch das Kunststoffrohr 200 können durch ein Spritzgussformteil gebildet sein.

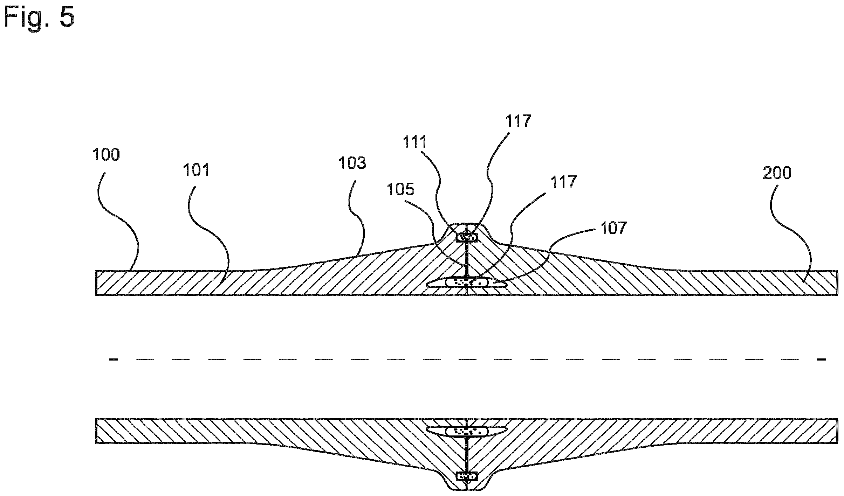

Fig. 5 zeigt eine Querschnittsansicht durch zwei Kunststoffrohre 100 und 200 nach einer Verbindung. Beim Verbinden der Kunststoffrohre 100 und 200 sammelt sich der Schweißaustrieb 117 in dem inneren Schweißaustriebsreservoir 107 und dem äußeren Schweißaustriebsreservoir 111 und erkaltet. Dadurch wird verhindert, dass Schweißaustrieb 117 nach außen dringt.

Die beiden Kunststoffrohre 100 und 200 sind an der Schweißfläche 111 durch die Schweißung fest miteinander verbunden. Der Verstärkungsabschnitt 103 mit kontinuierlich zunehmendem Außendurchmesser bewirkt, dass die an der Schweißfläche 105 anliegenden Kräfte über die gesamte Rohrwand 101 verteilt werden und sich eine Spannungsverteilung homogenisiert. Spannungsspitzen, die zu Rissen im Material führen können, werden vermindert. Der Verstärkungsabschnitt 103 bewirkt somit eine kraftflussoptimierte Außengeometrie. Zudem wird durch den Verstärkungsabschnitt 103 die Außenkontur des Kunststoffrohres 100 derart gestaltet, dass Kraftflussumlenkungen weitgehend verringert werden.

Vorteilhaft ist es, das innere Schweißaustriebsreservoir 107 möglichst tief auszuführen, so dass eine Beeinträchtigung der Wandstärke entsprechend gering ist und das Schweißaustriebsreservoir 107 trotzdem eine ausreichende Menge an Schweißaustrieb aufnehmen kann. Die Tiefe des Schweißaustriebsreservoirs 107 kann beispielsweise 1 mm bis 15 mm betragen. Insbesondere kann die Tiefe des Schweißaustriebsreservoirs 107 in einem Bereich von 1 bis 3 mal der Wandstärke der Rohrwand in einem unverstärkten Abschnitt liegen.

Durch das keilförmige innere Schweißaustriebsreservoir 107 werden eine kraftflussoptimierte Innenform und eine verbesserte Schweißgeometrie ermöglicht. Eine optimierte Kerbform des inneren Schweißaustriebsreservoirs 107 im Nutgrund ermöglicht eine zusätzliche Spannungsreduktion und bessere Spannungsgleichverteilung.

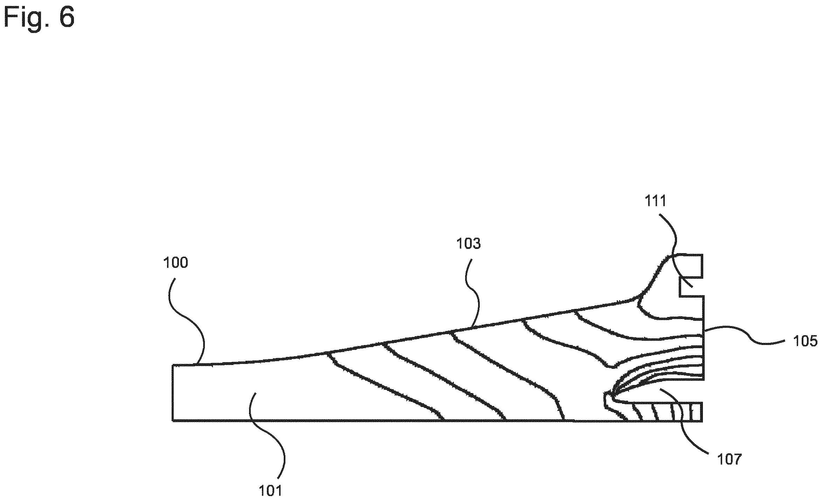

Fig. 6 zeigt eine Querschnittsansicht durch eine Rohrwand 101 des Kunststoffrohrs 100 mit Linien eines gleichmäßigen Spannungsverlaufs. Im Gegensatz zu der in Fig. 3 gezeigten Form treten keine Punkte mit Spannungsspitzen auf, an denen das Material dazu neigt zu reißen.

Durch den Verstärkungsabschnitt 103 mit kontinuierlich zunehmendem Außendurchmesser wird eine Formoptimierung des Kunststoffrohrs 100 im Schweißnahtbereich erreicht, so dass eine Reduktion und eine Gleichverteilung von Spannungen bei hohen Belastungen erreicht werden.

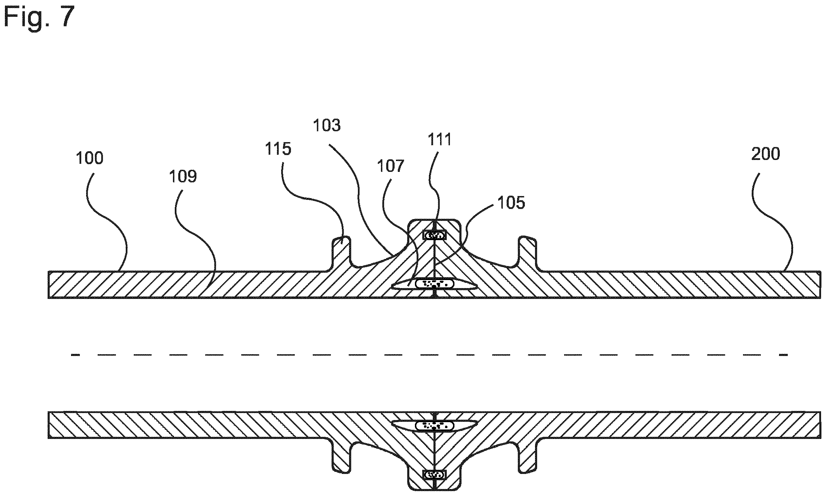

Fig. 7 zeigt eine weitere Querschnittsansicht durch die zwei Kunststoffrohre 100 und 200 nach einer Verbindung. Das Kunststoffrohr 100 umfasst einen integrierten, umlaufenden Verstärkungsring 115. Dadurch kann ein Auswölben der Kunststoffrohre 100 bei hohen Drücken verhindert werden. Zusätzlich sind in den Verstärkungsring 115 Fasern eingearbeitet, die die Festigkeit des Verstärkungsrings 115 erhöhen. Diese Fasern können beispielsweise Glasfasern, Metallfasern, Kunststofffasern oder Kohlenstofffasern sein.

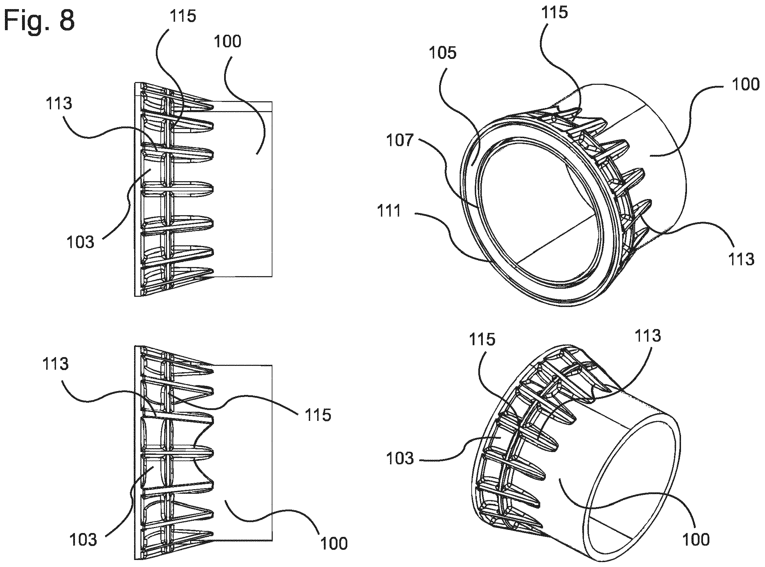

Fig. 8 zeigt unterschiedliche Ansichten eines Kunststoffrohres 100 mit dem Verstärkungsring 115 und Verstärkungsrippen 113. Die Verstärkungsrippen 113 sind integral in dem Verstärkungsabschnitt 103 gebildet und verlaufen in einer Längsrichtung des Kunststoffrohres 100. In den Verstärkungsrippen 113 nimmt der Außendurchmesser Ra des Kunststoffrohres 100 zur Schweißfläche 105 hin zu. Die Zunahme des Außendurchmessers Ra kann beispielsweise kontinuierlich oder linear sein.

Dadurch können Längskräfte an der Verbindungsstelle der beiden Kunststoffrohre 100 und 200 besonders wirksam aufgenommen werden. Zusätzlich können die aus Kunststoff gebildeten Verstärkungsrippen 113 durch Fasern verstärkt sein, die beispielsweise in Richtung der Verstärkungsrippen verlaufen.

Zusätzlich zu den Verstärkungsrippen 113 ist im Verstärkungsabschnitt 103 ein umlaufender Verstärkungsring 115 gebildet, der an einer Außenseite des Kunststoffrohres 100 umläuft. Der Verstärkungsring 115 ist ebenfalls durch Fasern verstärkt, die in Umlaufrichtung der Verstärkungsrings 115 verlaufen. Der Verstärkungsring 115 läuft im Bereich der Verstärkungsrippen 113 um und verbindet diese miteinander. Dadurch lässt sich die Stabilität des Verbindungsabschnittes besonders wirkungsvoll erhöhen.

Sowohl die Verstärkungsrippen 113 als auch der Verstärkungsring 115 sind einstückig in dem Kunststoffrohr 100 ausgebildet. Eine rippenähnliche Gestaltung auf der Außenseite des Schweißverbindungsbereichs führt zu einer Vermeidung von Materialanhäufungen bei der Fertigung, wie beispielsweise zu einer Vermeidung von Lunkern, einer Reduktion einer Zykluszeit und zu einem geringeren Materialeinsatz.

Durch die Erfindung werden eine kraftflussoptimierte Innenform sowie eine kraftflussoptimierte Außengeometrie des Kunststoffrohres erzielt. Durch eine lokale Verringerung der Bauteilsteifigkeit werden die durch Betriebslasten, wie beispielsweise Innendruck oder Zug-/Druckbelastung, entstehenden (Biege-)Spannungen reduziert. Dabei werden bestimmte Funktionen weiterhin gleichermaßen erhalten, beispielsweise ein Reservoir für den Schweißaustrieb. Eine Belastung im Schweißverbindungsbereich wird bei gleichzeitiger Beibehaltung der bisherigen Funktionen mit dem Focus einer ökonomischen Bauraumausnutzung minimiert.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Kunststoffrohr
- 101: Rohrwand
- 103: Verstärkungsabschnitt
- 105: Schweißfläche
- 107: Inneres Schweißaustriebsreservoir
- 109: Abschnitt mit konstantem Außendurchmesser
- 111: Äußeres Schweißaustriebsreservoir
- 113: Verstärkungsrippen
- 115: Verstärkungsring
- 117: Schweißaustrieb
- 119: Schweißaustrieb
- 121: Schweißfläche

- 200: Kunststoffrohr
- 300: Verbindungsbereich
- 400: Stelle höherer Spannung
- 401: Stelle höherer Spannung

## Patentansprüche

1. Kunststoffrohr (100) mit einer Rohrwand (101), **gekennzeichnet durch**:
eine Schweißfläche (105) zum Verschweißen des Kunststoffrohrs (100) mit einem weiteren Kunststoffrohr (200), die ein inneres, im Querschnitt keilförmiges Schweißaustriebsreservoir (107) zum Aufnehmen eines nach Innen gedrückten Schweißaustriebs (117) umfasst; und
einen Verstärkungsabschnitt (103) zum Verstärken der Rohrwand (101) im Bereich des Schweißaustriebsreservoirs (107), in dem ein Außendurchmesser (Ra) des Kunststoffrohres (100) zur Schweißfläche hin zunimmt,
wobei der Verstärkungsabschnitt (103) einen außen umlaufenden Verstärkungsring (115) umfasst, wobei der Verstärkungsring (115) in Umlaufrichtung durch Fasern verstärkt ist.

2. Kunststoffrohr (100) nach Anspruch 1, wobei der Innendurchmesser (Ri) des Kunststoffrohrs (100) im Verstärkungsabschnitt (103) konstant ist.

3. Kunststoffrohr (100) nach einem der vorangehenden Ansprüche, wobei das innere Schweißaustriebsreservoir (107) umlaufend in der Schweißfläche (105) gebildet ist.

4. Kunststoffrohr (100) nach einem der vorangehenden Ansprüche, wobei das innere Schweißaustriebsreservoir (107) eine Tiefe von 1 mm bis 15 mm, vorzugsweise von 4 mm bis 10 mm und hochvorzugsweise von 5 mm bis 8 mm aufweist.

5. Kunststoffrohr (100) nach einem der vorangehenden Ansprüche, wobei die Rohrwand (101) zwischen dem inneren Schweißaustriebsreservoir (107) und einer Außenseite des Verstärkungsabschnittes (103) zumindest die gleiche Wandstärke wie in einem Abschnitt (109) mit konstantem Außendurchmesser aufweist.

6. Kunststoffrohr (100) nach einem der vorangehenden Ansprüche, wobei die Schweißfläche (105) ein äußeres Schweißaustriebsreservoir (111) zum Aufnehmen eines nach Außen gedrückten Schweißaustriebs (119) umfasst.

7. Kunststoffrohr (100) nach einem der vorangehenden Ansprüche, wobei der Verstärkungsabschnitt (103) an einer Außenseite Verstärkungsrippen (113) umfasst.

8. Kunststoffrohr (100) nach Anspruch 7, wobei die Verstärkungsrippen (113) in einer Längsrichtung des Kunststoffrohres (100) verlaufen.

9. Kunststoffrohr (100) nach Anspruch 7 oder 8, wobei die Verstärkungsrippen (113) durch Fasern in Richtung der Verstärkungsrippen verstärkt sind.

10. Kunststoffrohr (100) nach Anspruch 7, 8 oder 9, wobei die Verstärkungsrippen (113) mit dem Verstärkungsring (115) verbunden sind.

11. Kunststoffrohr (100) nach Anspruch 1 oder 9, wobei die Fasern Glasfasern, Metallfasern, Kunststofffasern oder Kohlenstofffasern sind.

12. Kunststoffrohr (100) nach einem der vorangehenden Ansprüche, wobei das Kunststoffrohr ein Spritzgussformteil ist.

## Claims

1. Plastic pipe (100) comprising a pipe wall (101), **characterized by**:
a welding area (105) for welding the plastic pipe (100) with a further plastic pipe (200), which comprises an inner welding expulsion reservoir (107) with a wedge shape in cross-section for receiving an inwardly-pressed welding expulsion (117); and
a reinforcing section (103) for reinforcing the pipe wall (101) in the region of the welding expulsion reservoir (107), in which an outer diameter (Ra) of the plastic pipe (100) increases towards the welding area,
wherein the reinforcing section (103) comprises an outer circumferential reinforcing ring (115), wherein the reinforcing ring (115) is reinforced by fibers in direction of rotation.

2. Plastic pipe (100) according to claim 1, wherein the inner diameter (Ri) of the plastic pipe (100) is constant in the reinforcing section (103).

3. Plastic pipe (100) according to any one of the preceding claims, wherein the inner welding expulsion reservoir (107) is formed circumferentially in the welding area (105).

4. Plastic pipe (100) according to any one of the preceding claims, wherein the inner welding expulsion reservoir (107) comprises a depth of 1 mm to 15 mm, preferably of 4 mm to 10 mm and highly-preferably of 5 mm to 8 mm.

5. Plastic pipe (100) according to any one of the preceding claims, wherein the pipe wall (101) comprises at least the same wall thickness between the inner welding expulsion reservoir (107) and an outer side of the reinforcing section (103) as in a section (109) comprising a constant outer diameter.

6. Plastic pipe (100) according to any one of the preceding claims, wherein the welding area (105) comprises an outer welding expulsion reservoir (111) for receiving an outwardly-pressed welding expulsion (119).

7. Plastic pipe (100) according to any one of the preceding claims, wherein the reinforcing section (103) comprises reinforcing ribs (113) on an outer side.

8. Plastic pipe (100) according to claim 7, wherein the reinforcing ribs (113) extend in a longitudinal direction of the plastic pipe (100).

9. Plastic pipe (100) according to claim 7 or 8, wherein the reinforcing ribs (113) are reinforced by fibers in direction of the reinforcing ribs.

10. Plastic pipe (100) according to claim 7, 8 or 9, wherein the reinforcing ribs (113) are connected with the reinforcing ring (115).

11. Plastic pipe (100) according to claim 1 or 9, wherein the fibers are glass fibers, metal fibers, plastic fibers or carbon fibers.

12. Plastic pipe (100) according to any one of the preceding claims, wherein the plastic pipe is an injection-moulded component.

## Revendications

1. Tuyau en plastique (100) comportant une paroi de tuyau (101), **caractérisé par**:
une surface de soudage (105) pour souder le tuyau en plastique (100) avec un autre tuyau en plastique (200), laquelle comporte un réservoir d'expulsion de soudage intérieur en section transversale en forme de coin (107) pour recevoir une expulsion de soudage (117) pressée vers l'intérieur; et
une section de renforcement (103) pour renforcer la paroi de tuyau (101) dans la région du réservoir d'expulsion de soudage (107), dans laquelle un diamètre extérieur (Ra) du tuyau en plastique (100) augmente en direction de la surface de soudage,
dans lequel la section de renforcement (103) comporte un anneau de renforcement (115) circonférentiel à l'extérieur, dans lequel l'anneau de renforcement (115) est renforcé par des fibres dans le sens de rotation.

2. Tuyau en plastique (100) selon la revendication 1, dans lequel le diamètre intérieur (Ri) du tuyau en plastique (100) est constant dans la section de renforcement (103).

3. Tuyau en plastique (100) selon l'une des revendications précédentes, dans lequel le réservoir d'expulsion de soudage intérieur (107) est formé périphériquement dans la surface de soudage (105).

4. Tuyau en plastique (100) selon l'une des revendications précédentes, dans lequel le réservoir d'expulsion de soudage intérieur (107) a une profondeur de 1 mm jusqu'à 15 mm, préférablement de 4 mm jusqu'à 10 mm et encore plus préférablement de 5 mm jusqu'à 8 mm.

5. Tuyau en plastique (100) selon l'une des revendications précédentes, dans lequel la paroi de tuyau (101) a, entre l'intérieur du réservoir d'expulsion de soudage (107) et une partie extérieure de la section de renforcement (103) au moins la même épaisseur de paroi que dans une section (109) comportant un diamètre extérieur constant.

6. Tuyau en plastique (100) selon l'une des revendications précédentes, dans lequel la surface de soudage (105) comporte un réservoir d'expulsion de soudage extérieur (111) pour recevoir une expulsion de soudage (119) pressée vers l'extérieur.

7. Tuyau en plastique (100) selon l'une des revendications précédentes, dans lequel la section de renforcement (103) comporte des nervures de renforcement (113) dans une partie extérieure.

8. Tuyau en plastique (100) selon la revendication 7, dans lequel les nervures de renforcement (113) s'étendent dans une direction longitudinale du tuyau en plastique (100).

9. Tuyau en plastique (100) selon la revendication 7 ou 8, dans lequel les nervures de renforcement (113) sont renforcées par des fibres en direction des nervures de renforcement (113).

10. Tuyau en plastique (100) selon la revendication 7, 8 ou 9, dans lequel les nervures de renforcement (113) sont connectées à l'anneau de renforcement (115).

11. Tuyau en plastique (100) selon la revendication 1 ou 9, dans lequel les fibres sont des fibres de verre, des fibres métalliques, des fibres plastiques ou des fibres de carbone.

12. Tuyau en plastique (100) selon l'une des revendications précédentes, dans lequel le tuyau en plastique est une pièce moulée par injection.
